(19) Europäisches Patentamt
European Patent Office
Office européen des brevets

(11) **EP 2 704 364 A1**

(12) **EUROPEAN PATENT APPLICATION**

(43) Date of publication:
**05.03.2014 Bulletin 2014/10**

(21) Application number: **12183011.1**

(22) Date of filing: **04.09.2012**

(51) Int Cl.:
*H04L 12/26* (2006.01)   *H04B 10/032* (2013.01)
*H04J 14/02* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• **Layec, Patricia**
**91620 NOZAY (FR)**

• **Dorize, Christian**
**91620 NOZAY (FR)**

(74) Representative: **Loyer & Abello**
**9, rue Anatole de la Forge**
**75017 Paris (FR)**

Remarks:
Amended claims in accordance with Rule 137(2) EPC.

(54) **Optical communication method for transmitting an information signal**

(57)    An optical communication method for transmitting an information signal comprises:

sending a plurality of modulated optical signals (3, 4) carrying an information signal from a transmitting apparatus (A) to a receiving apparatus (B) via a plurality of optical paths,

receiving the plurality of modulated optical signals at the receiving apparatus (B) and

combining the plurality of modulated optical signals to detect the information signal,

monitoring a quality of transmission of the modulated optical signals, and

in response to degradation of the quality of transmission of a first one (3) of the modulated optical signals, performing a recovery action (5) to improve a quality of transmission of a second one (4) of the modulated optical signals. The recovery action comprises regenerating the second modulated optical signal at an intermediate apparatus (E) and/or decreasing a symbol rate of the second modulated optical signal sent from the transmitting apparatus (A).

FIG.3

**Description**

**Field of the invention**

The invention relates to the technical field of optical communication methods and systems, in particular to optical communications in fiber-based networks.

**Background**

Nowadays, a large portion of long-haul communications is achieved through WDM optical links. With the continued rise in Internet traffic, WDM transmissions gain ground in all segments of telecom networks. The outstanding Quality of Service that is expected at least in core segments of a network can only be achieved with highly efficient fault-protection methods.

Internet Engineering Task Force's RFC 4872 "RSVP-TE Extensions for E2E GMPLS Recovery" of May 2007 discloses a 1+1 LPS protection method. Using this type of protection, a protecting Label-Switched Path (LSP) is signaled over a dedicated resource-disjoint alternate path to protect an associated working LSP. Normal traffic is simultaneously sent on both LSPs and a selector is used at the egress node to receive traffic from one of the LSPs. If a failure occurs along one of the LSPs, the egress node selects the traffic from the valid LSP.

**Summary**

In an embodiment, the invention provides an optical communication method for transmitting an information signal, comprising:

sending a plurality of modulated optical signals carrying an information signal from a transmitting apparatus to a receiving apparatus via a plurality of optical paths,
receiving the plurality of modulated optical signals at the receiving apparatus and combining the plurality of modulated optical signals to detect the information signal,
monitoring a quality of transmission of the modulated optical signals, and
in response to degradation of the quality of transmission of a first one of the modulated optical signals, performing a recovery action to improve a quality of transmission of a second one of the modulated optical signals.

According to embodiments, such an optical communication method may comprise one or more of the features below.

In embodiments, the combining of the plurality of modulated optical signals is performed in accordance with combination parameters, the method further comprising modifying the combination parameters in response to degradation of the quality of transmission of the first modulated optical signal. Thanks to these features, the influence of a degraded or lost first signal can be diminished whereas the influence of a second, improved signal can be enhanced in the resulting combination process.

In embodiments, the method further comprises discontinuing the combining of the plurality of modulated optical signals in response to degradation of the quality of transmission of the first modulated optical signal, and processing the second modulated optical signal independently to detect the information signal.

In embodiments, the recovery action may comprise one or more actions selected in the group consisting of regenerating the second modulated optical signal at an intermediate apparatus between the transmitting apparatus and the receiving apparatus, decreasing a symbol rate of the second modulated optical signal sent from the transmitting apparatus, changing a modulation scheme of the second modulated optical signal sent from the transmitting apparatus to a more robust modulation scheme, changing an error-correction code of the second modulated optical signal sent from the transmitting apparatus to a more robust error-correction code, and discontinuing a best-effort traffic flow modulated onto the second modulated optical signal sent from the transmitting apparatus.

In embodiments, the method further comprises buffering the received modulated optical signals at the receiving apparatus to compensate for a differential delay between the optical paths.

A variety of parameters can be measured to monitor the quality of transmission of the optical signals, e.g. eye diagram opening, bit-error rate, and the like. In embodiments, the quality of transmission monitoring comprises estimating an optical or electrical signal-to-noise ratio of the modulated optical signals.

In embodiments, the combining of the plurality of modulated optical signals is performed in accordance with a maximum ratio combining method. A variety of diversity combining methods can be used as well, e.g. a selective combining method or an equal gain combining method.

In embodiments, the method further comprises performing a reversion action and/or modifying combination parameters in accordance with which the combining of the plurality of modulated optical signals is performed, in response to improvement of the quality of transmission of the first modulated optical signal. Reversion actions refer to actions that inverse or compensate for the recovery actions previously taken. Reversion actions aim to degrade the quality of transmission of the second modulated optical signal to resume energy savings and/or transmission capacity improvements.

In accordance with embodiments, the reversion action may include steps such as interrupting regeneration of the second modulated optical signal at an intermediate apparatus between the transmitting apparatus and the receiving apparatus to forward the second modulated optical signal transparently, increasing a symbol rate of the second modulated optical signal sent from the transmitting apparatus, changing a modulation scheme of the second modulated optical signal sent from the transmitting apparatus to a less robust, yet more capacity efficient, modulation scheme, or changing an error-correction code of the second modulated optical signal sent from the transmitting apparatus to a less robust, yet more efficient error-correction code, resuming the sending of a best-effort traffic flow modulated onto the second modulated optical signal from the transmitting apparatus, or resuming the combining of the plurality of modulated optical signals.

In an embodiment, the invention also provides an optical communication network, comprising:

a transmitting apparatus comprising a plurality of output ports and an optical transmission module adapted to send a plurality of modulated optical signals carrying an information signal through the plurality of output ports,
a receiving apparatus comprising a plurality of input ports and an optical reception module, and
a plurality of optical paths each connecting an output port of the transmitting apparatus to an input port of the receiving apparatus,

wherein the optical reception module is adapted to receive the plurality of modulated optical signals via the input ports and to combine the plurality of modulated optical signals to detect the information signal,
wherein the receiving apparatus further comprises a recovery signaling module adapted to transmit a recovery signal in response to degradation of the quality of transmission of a first one of the modulated optical signals to cause improvement of a quality of transmission of a second one of the modulated optical signals.

According to embodiments, such an optical communication network may comprise one or more of the features below.

In an embodiment, the receiving apparatus further comprises a monitoring module adapted to monitor a quality of transmission of the modulated optical signals.

In an embodiment, the optical communication network further comprises an hybrid optical node located on an optical path of the second modulated optical signal, the hybrid optical node comprising a transparent forwarding section, a regenerated forwarding section, and a recovery control module adapted to switch the second modulated optical signal from the transparent forwarding section to the regenerated forwarding section, i.e. to start regeneration of the second modulated optical signal, in response to receiving the recovery signal.

In an embodiment, the transmitting apparatus further comprises a recovery control module adapted to modify a parameter of the second modulated optical signal in response to receiving the recovery signal, wherein the parameter is selected in the group consisting of bit-rate, symbol rate, modulation scheme and error-correction coding scheme.

Aspects of the invention stem for the observation that the protection connection in a 1+1 LSP protection method permanently consumes resources, whereas the actual time during which the connection is used depends on the rate of failures. For example the probability of a failure caused by a cut fiber is estimated to 4.39 cuts/year/1,000 sheath-miles. This corresponds approximately to one cut per day in a large operator network made up of 100,000 miles of fiber cables.

Aspects of the invention are based on the idea of fmding protected transmission methods that achieve a better capacity in optical networks than 1+1 protection. Aspects of the invention are based on the idea of finding protected transmission methods that achieve a better energy-efficiency in optical networks than 1+1 protection. Aspects of the invention are based on the idea of exploiting the signal redundancy implied by 1+1 protection schemes to obtain a spatial-diversity gain at the receiver. Aspects of the invention are based on the idea of abstaining from optional energy-consuming and/or capacity consuming steps of the optical signal transmission as long the plurality of instances of the information signal reach the receiver with a sufficient level of quality, and performing those optional energy-consuming and/or capacity consuming steps whenever the spatial-diversity gain obtained at the receiver is diminished or lost.

**Brief description of the drawings**

These and other aspects of the invention will be apparent from and elucidated with reference to the embodiments described hereinafter, by way of example, with reference to the drawings.

Figure 1 is a functional representation of an optical network in a normal state.
Figure 2 is a graph showing a diversity-gain that can be obtained in the optical network of Fig. 1.

Figure 3 shows the optical network of Fig. 1 in a recovery state, accordance with a first embodiment.

Figure 4 is a functional representation of a receiving node that can be used in the optical network of Fig. 1.

Figure 5 is a functional representation of a hybrid switching node that can be used in the optical network of Fig. 1.

Figure 6 is a functional representation of a receiver buffer module that can be used in the optical network of Fig. 1.

Figure 7 shows the optical network of Fig. 1 in a recovery state, accordance with a second embodiment.

Figure 8 is a functional representation of a transmitting node and a receiving node that can be used in the optical network of Fig. 1.

Figure 9 is a graph showing a performance of different modulation schemes that can be used in the optical network of Fig. 1.

## Detailed description of the embodiments

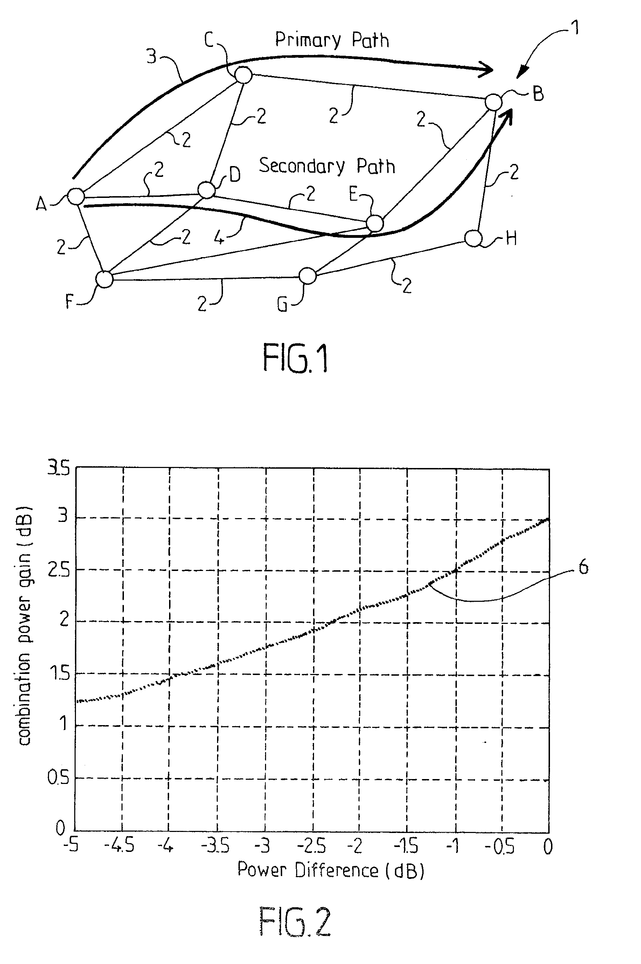

With reference to Figure 1, an optical communications network 1 is schematically depicted. The network comprises a plurality of optical switching nodes A, B, C, D, E, F, G and H interconnected by optical links 2. The number of nodes, number of links and topology as shown are purely illustrative. The topology could be of any type, e.g. point to point, tree-like, ring-like or mesh.

The optical switching nodes are transparent nodes, i.e. capable of switching the optical signals in the optical domain without an Optical-to-electronic conversion. Some or all of the optical switching nodes may also be hybrid nodes, i.e. nodes including a transparent forwarding function and a regenerated forwarding function that can be used selectively for switching an optical signal between an input port and an output port of the node. A number of architectures are available to those skilled in the art for implementing such transparent or hybrid optical nodes, e.g. based on components such as wavelength selective switches, optical splitters, power combiners, wavelength multiplexers and demultiplexer, optical gates, and the like.

Hybrid nodes are of particular interest to build flexible WDM optical networks capable of establishing optical connections which are diverse in terms of path length, source node, destination node and capacity as a function of demand. In an embodiment, routing and signaling in such a flexible WDM network can be achieved with a GMPLS control plane.

Indeed, the optical reach of a transparent optical connection generally evolves inversely to spectral efficiency in a WDM network. For instance, a 10Gbps transponder is able to reach 3000km while a 100Gbps transponder only achieves 800 to 1200 km. Therefore, a demand for optical regenerations changes as a function of connection length and data-rate. Hybrid nodes are one way to cope with such changing demand.

For the sake of illustration, Figure 1 shows how an information signal can be transmitted from source node A to destination node B in accordance with embodiments of the invention.

Node A uses a plurality of route-diverse optical connections to transmit a plurality of instances of the same information signal to node B. Two such optical connections 3 and 4 are shown on Fig. 1. Namely, connection 3 takes the path A-C-B and connection 4 takes the path A-D-E-B. More than two connections could be used as well.

As a convention in Figures 1, 3 and 7, an empty circle represents a node that forwards the optical signal in a transparent manner and a solid black circle represents a node that forwards the optical signal in a regenerated manner, i.e. with O-E-O conversions. Hence, the optical connections 3 and 4 are fully transparent in Fig. 1. This is a very simplified representation of the node. An actual WDM node generally switches a number of optical connections at the same time and may do so in a transparent manner for some of those connections and in a regenerated manner for the others.

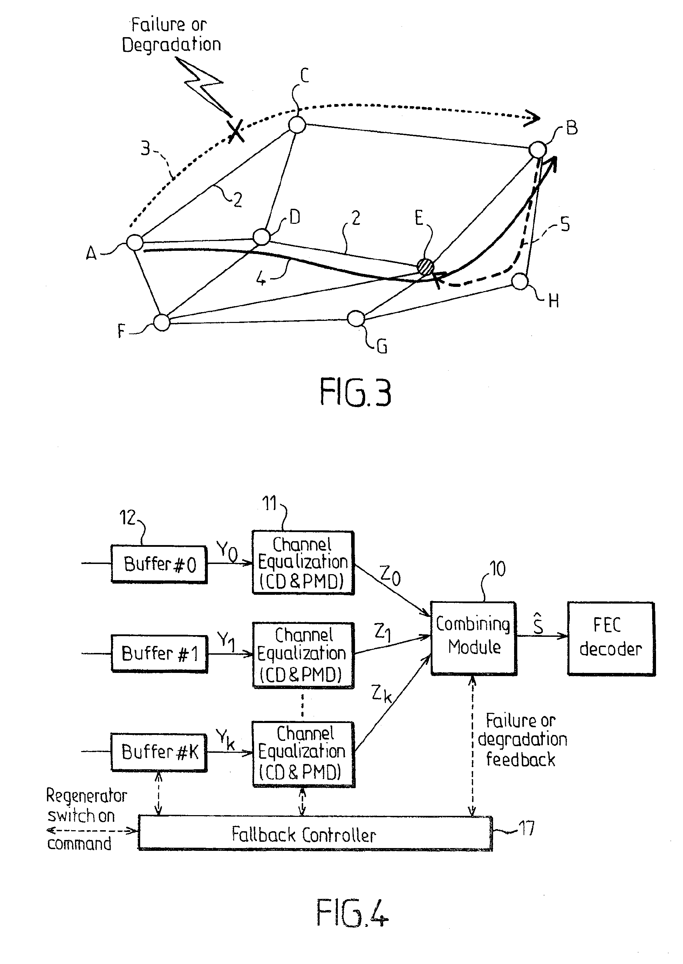

At the destination node B, a combining module 10 (Fig. 4) exploits the redundant optical connections 3 and 4 (or more). The benefits are two-fold. Firstly, a power combining gain is obtained by receiving the modulated information signal twice (or more). Secondly, a diversity gain is obtained since the emitted signal propagates through different physical links, fibers and nodes, thus experiencing potentially different dispersion, noise and non-linear effects.

These two benefits translate into a significant electrical Signal-to-noise ratio (SNR) improvement allowing an increased optical reach after recombination at the receiver side. The improved SNR allows a reduction of the energy consumption compared to a situation, in which the information signal must be demodulated from a single modulated optical signal.

In other words, a single information signal x is transmitted over an integer number K (with $K \geq 2$) of optical connections. In Figure 1, the first optical connection 3 is called the primary path and the optical connection 4 is called secondary path. The receiving node B is in charge of combining the optical signals constructively, e.g. with a Maximum Ratio Combining algorithm (MRC), so as to improve the total SNR. An increase of the optical reach brought by the redundant optical signals enables to spare energy by reducing a number of active regenerators. An increase of the SNR brought by the redundant optical signals enables to spare energy by using a more energy-efficient transmission method.

The graph 6 in Figure 2 illustrates the combination power gain obtained by combining two redundant optical signals at the destination node. The power gain depends on the difference between the received power levels of the two optical signals, which is marked in abscissa in dB units.

In a network model, the optical SNR (OSNR) for a wavelength channel at 1550 nm can be expressed with the following link budget:

$$OSNR = PTx + 58 - Loss/span - NF - G - 10 * log10(\#spans)$$

where #*spans* denotes the number of fiber spans along the respective connection path, *PTx* is the power per channel launched into each span; NF refers to the noise figure of the amplifier; G is the amplifier gain which is typically taken to be equal to the span loss. To get a rough idea of the OSNR difference between a primary and a secondary path, the assumption is made that *PTx, NF,* G and Loss/span are identical for both paths. According to this assumption, it comes that:

$$\Delta OSNR = OSNRprimary - OSNRsecondary$$
$$= 10 * Log10(\#spansprimary \, / \, \#spanssecondary)$$

Example

A primary path length is 2000km with 20 spans of 100km while a secondary path length is 2400km with 24 spans of 100km. The above model yields *ΔOSNR* = -0.8 *dB.* The resulting power combining gain is about 2.7 dB.

On top of the power combining gain, a diversity gain may be also obtained to further contribute to the SNR increase. Since the primary and secondary connections 3 and 4 have different characteristics, hence are not subject to the same dispersion and non-linear effects, potential errors may not occur on the same symbol location. This improves the reliability of the information flow after recombination at the receiver side using spatial diversity combination techniques.

The above operation at the receiver side is the default operating mode as long as no failure occurs. In a fallback mode, in which the power combining gain and/or receiver diversity gain cannot be exploited anymore, e.g. due to a failure or degradation impacting one of the optical connections, a system controller activates a recovery mechanism to compensate for the resulting SNR degradation.

In an embodiment illustrated in Fig. 3, it is assumed that some back up regenerators are provisioned along the connection path of at least one of the redundant optical connections. The regenerators may include a fast sleep mode feature, as described in "Power management of optoelectronic interfaces for dynamic optical networks", A. Morea et al., ECOC 2011.

As shown in Fig. 3, in case of failure of the first connection 3, a recovery signal 5 is sent to an intermediate node of the second connection 4, i.e. node E, in order to rapidly transition a regenerator from a sleep mode to an active mode. In addition, the optical node E rapidly routes the optical connection 4 through the regenerator, whereas the regenerator was previously bypassed. The recovery signal 5 that causes the optical node to switches from the transparent forwarding mode to the regenerated forwarding mode can be sent by the destination node B as shown or any other network element, e.g. a control plane element that collects failure detection events.

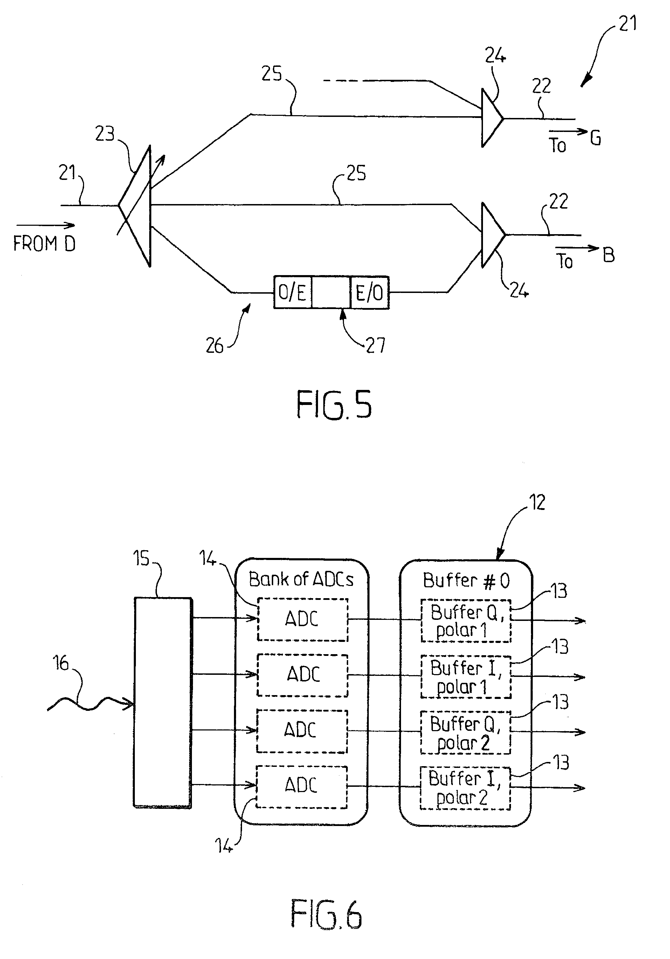

Figure 5 illustrates an embodiment of a hybrid WDM optical node 20 that can implement node E. A wavelength selective switch 23 is arranged at each WDM input port 21 of the node. A power combiner 24 is arranged at each WDM output port 22 of the node. Between the input ports and output ports, the node comprises transparent forwarding paths, as shown at 25, and regenerated forwarding path, as shown at 26. A signal regenerator 27 comprises an optical-to-electronic converter, an electronic signal processing section and an electronic-to-optical converter. The WSS 23 is adapted to switch the incoming optical signals to either one of the forwarding paths on a wavelength by wavelength basis. The power combiner 24 combines the forwarding paths so as to always forward the optical signals regenerated or not regenerated.

In the state shown on Fig. 1, the optical connection 4 is forwarded towards node B through the transparent forwarding path 25. In response to receiving the recovery signal 5, the WSS 23 is reconfigured to forward the optical connection 4 towards node B through the regenerated forwarding path 26. Thus, the optical connection 4 achieves the state shown on Fig. 3.

With reference to Fig. 4, an embodiment of the destination node B will now be described. More precisely, an optical receiving device in node B is functionally depicted. For the sake of simplicity, it is assumed that each optical connection corresponds to a single wavelength channel.

Vector s of size $N_T$ denotes the information signal sent by source node A across the K optical connections which are received at the destination node B. In node B, $y_i$ denotes the received vector of size $N_R$ over the ith optical connection. At the receiver side, each received vector $y_i$ is first equalized by a channel equalization module 11, i.e. for compensating different effects such as chromatic dispersion, Polarization mode dispersion and cross polarization modulation. Channel equalization could consist of blind or non-blind algorithms.

The resulting equalized vectors $\mathbf{z_i}$ are then combined constructively in the combining module 10. This step consists in weighting the equalized vectors $\mathbf{z_i}$ by a weighting vector $\mathbf{w_i}$, i = 0, ..., $K$ so as to build a better estimated vector $\hat{\mathbf{s}} = \sum i \, \mathbf{w_i} \, \mathbf{z_i}$ of the emitted symbols. The weights $w_i$ are such that each represents the contribution of the connection i to the global estimate $\hat{\mathbf{s}}$. For instance, if an optical connection provides a high electrical SNR estimated at the output of the equalizer module 11, its contribution is set to be higher than another optical connection experiencing more severe attenuation and dispersion effects, i.e. due to span length or physical differences in the optical fibers. The combining module 10 executes a diversity-combination algorithm such as the maximum ratio combination to maximize the equivalent SNR after recombination. For instance, the equalizer module 11 measures the SNR and provides the measurement to the fallback controller.

Diversity-combining techniques adapted for optical signals, and in particular for quadrature-modulated signals, are disclosed in more details in US-A1-2002109885.

To cope with the different lengths between the primary and secondary paths and to synchronize the multiple redundant optical signals at the destination node B, buffer modules 12 with fast access may be provided, preferably with configurable buffer lengths so as to ensure flexibility in case of network reconfiguration. Fig. 4 shows the buffer implementation at the receiver side. Alternatively, similar buffer modules can be implemented at the transmitter side.

Figure 6 illustrates an embodiment of the buffer module 12 adapted for high-speed transmission signals formats such a QPSK modulation with polarization multiplexing. In that case, the buffer module 12 may actually be composed of four parallel buffers 13 in order to have one buffer per Analog-to-Digital Converter 14, i.e. one per quadrature (I and Q) and per polarization (polar 1 and polar 2). Note that this embodiment operates with a coherent mixer 15 to detect both phase and amplitude of the received signals. The device shown on Fig. 6 is adapted for one incoming wavelength channel 16.

The depth of a buffer 13 should be selected as a function of the difference in length between the shortest and the longest optical connections. For instance, if that difference is equal to 200km, i.e. about $10^{-3}$ s, the resulting buffer size is about 62.5 Mbytes for a WDM transmission at 25 Gbaud with an oversampling factor of 2 and quantification on 10 bits. The power consumption of such buffers is negligible compared to the power savings involved by the switching-off of a regenerator device (e.g. 350 W at 100Gbps). In an embodiment, the control plane of the network is able to manage the routing and wavelength assignment of the optical connections by taking into account the buffer size limitation as a constraint.

To summarize, Fig. 1 shows the network in a first operating mode, which is the normal mode when no failure occurs. Fig. 3 shows the network in a second operating mode, which is the fallback mode when a failure prevents at least one optical connection from being diversity-combined with the other connections at the receiving node B. To switch from one to the other mode, the transmitting node A, the receiving node B and the intermediate nodes C, D and E may exchange signaling messages.

In the normal mode, the transmitting node A is sending the same information x over the $K$ lightpaths. The receiving node B exploiting this redundant information appropriately through a combination module that substantially extends the equivalent transparent reach of the optical connections, e.g. by several dBs with only two connections as seen in Fig. 2. The extended transparent reach makes it possible to put unnecessary regenerators in a sleep mode and to bypass these inactive regenerators to cross the intermediate nodes in a transparent manner.

The fallback mode is activated when at least one of the optical signals falls below a given quality threshold. This includes failure affecting a whole optical connection or signal processing issues occurring at the receiving node before the recombination module. The consequence of removing at least one of the optical signals from the diversity-combination is a decrease in the equivalent transparent reach. Hence, it may become necessary to switch on one or several regenerators in the remaining optical connections.

In an embodiment, in the event of a failure or degradation affecting the signal quality of an optical connection, a control plane element of the network that detects such an event propagates a signaling message to the source node A and the destination node B. Once the destination node B has detected the event, a module referred to as fallback controller 17 triggers recovery actions, such as adjusting the combining weights in the combining module 10 to remove the contribution of the faulty signal and communicating with the regenerators that need to be switched on in the network.

In an embodiment, the selection of a regenerator in response to a particular event has been computed off-line during a configuration phase of the network, so that the fallback controller 17 can rely on look-up tables to select the appropriate address. The controller then sends a signaling message to the nodes that require a regenerator to be switched on.

Similarly, in the event that a previously faulty optical connection is repaired or reestablished, the destination node B can take appropriate action to revert to the normal mode, i.e. reconfiguring the combining module to combine the repaired signal and sending a signaling message to intermediate nodes in which a regenerator can be turned off and bypassed. In an embodiment, a control plane element of the network that detects such an event propagates a signaling message to the source node A and/or the destination node B.

As an example, Fig. 4 shows the fallback controller 17 implemented at the receiver side. Alternatively, the fallback controller 17 could be implemented at the source node A or in further network elements.

An example will now be described to illustrate the electrical power savings that may be obtained in the above embodiment, due to the reduced number of regenerators that are powered on in a long haul network. The overall power gain is likely to increase with the advent of high-capacity modulation schemes that improve capacity at the expense of a shorter transparent reach.

For illustration, two redundant connections are considered (i.e. $K=2$), e.g. as in a conventional 1+1 protection scheme. The amount of regenerators that could be powered down thanks to the above methods is estimated to about 35%. This result was obtained by numerical simulation of a 46-node and 61-link long haul network with 1+1 protection of all connections. The primary path is assumed to be the shortest path and the protection path has been simulated to yield a random distance increase by 20 to 60% compared to the primary path. With 100Gbps WDM data rate per channel and a transparent optical reach of 1200 km, the equivalent optical reach after recombination is improved by a factor that spreads between 1.33 and 1.44. Under those assumptions, 35% of the regenerators in the network could be bypassed and turned off in a sleep mode as long as there is no failure.

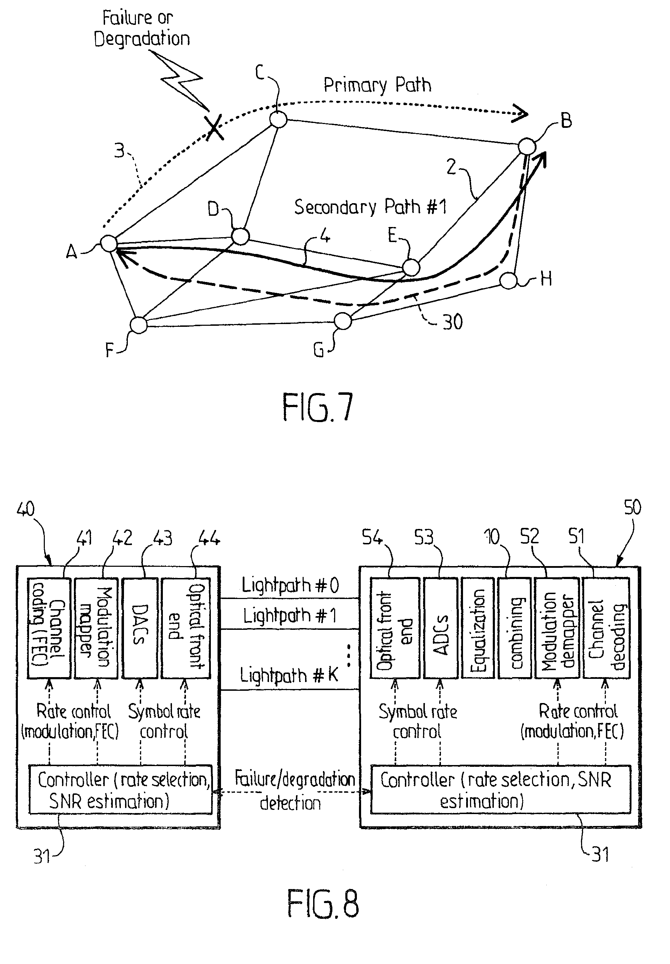

Turning now to Figures 7 to 9, there will be described a second embodiment of the optical network, which also operates in a normal mode and a fallback mode. The normal mode is similar to the embodiment of Fig. 1. Namely, the destination node combines multiple redundant optical signals to improve the SNR.

Whereas the first embodiment above takes advantage of the SNR improvement to reduce the amount of signal regeneration in the network, the second embodiment translates this SNR gain into a capacity growth. Namely, the normal operating mode relies on signal parameter values, such as data rate, symbol rate, modulation order and/or channel coding rate to obtain a higher capacity than the standard capacity obtainable without the diversity-combination step at the receiver. In an embodiment, the resulting extra-capacity is filled with best effort traffic while the standard capacity conveys QoS-guaranteed traffic.

In the event of a failure affecting one optical connection, the degraded signal is taken out of the diversity-combining process at the receiver side and the other connections are reconfigured to a fall-back mode. Namely, the transmitter and the receiver come back to the standard data rate that does not require the diversity-combining process. At the same time, the best effort traffic carried by the extra capacity is temporarily ignored until the normal mode can be recovered. To switch from one to the other mode, signaling messages are exchanged between the transmitter and the receiver.

Turning to Fig. 1, it is now assumed that the transmitted data rate of both redundant optical connections 3 and 4 is set to $R_1$. Two connections are shown for the sake of simplicity. However, more than two redundant connections can be combined in the same manner.

Turning to Fig. 7, the fallback mode is activated when the optical connection 3 falls below a given quality threshold. The consequence of removing at least one optical signal from the diversity-combination is a decrease of the total SNR. Hence, the destination node B sends a signaling message 30 to the source node A in order to lower the transmission data rate to $R_2$ with $R_2 < R_1$.

In cases with $K > 2$ (not illustrated), if an additional connection fails, a new, lower data rate $R_3$ is selected in the same manner for the remaining connection. The procedure can continue until a single optical connection remains. In this case, the chosen data rate represents the minimal throughput accepted between source node A and destination node B. This minimal throughput is referred to as guaranteed rate $R_G$, which can carry QoS-guaranteed traffic. By contrast, the extra-capacity beyond $R_G$ is preferably used to convey best effort traffic, i.e. traffic which can be easily pre-empted in the event of a failure.

In the event of a failure or degradation of an optical signal, the receiving node and/or a control plane element of the network detects that the signal quality falls below a predefined threshold and then propagates a signaling message to inform the source and destination nodes about the event. Once received at the destination node, the event causes the receiver to adjust the combining weights to remove the contribution of the faulty signal.

At the same time, the transmitter located at the source node switches to a different data rate by adapting signal parameters such as the channel coding (FEC overhead), the modulation scheme or the symbol rate or a combination of these. The receiver at the destination node proceeds to the same adaptation. This rate-adaptation is controlled by a controller module 31, which can be located either at the transmitter or the receiver side or at both sides. Figure 8 shows an embodiment with the controller module 31 at both sides.

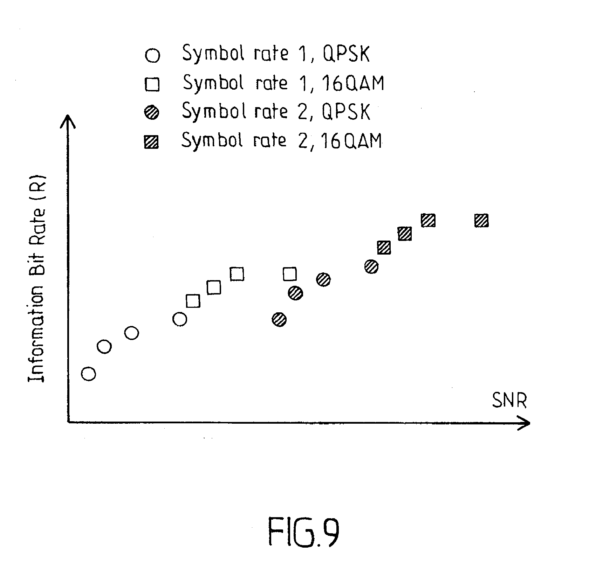

In an embodiment, the rate adaptation process relies on predefined look-up tables loaded in a memory of the node. Hence the controller decision process can be made simple. Figure 9 illustrates in a qualitative manner the relationship between SNR in abscissae and data rate in ordinates for a number of modulation schemes that are representative of modem optical networks. This information is known in advance and can be stored in the look-up table to assist the controller module 31 in selecting an appropriate modulation scheme and symbol rate as a function of an estimate of the available SNR.

In an embodiment, the controller module 31 selects the best data rate as a function of the estimated SNR value. The estimation of the SNR value takes into account the number of currently functional optical connections, whenever this number is decreasing (i.e. in the event that one connection has failed) or increasing (i.e. in the event that one connection was recovered). For instance, a simple method relies on the OSNR graph of Fig. 2. Namely, the methods consists in evaluating the difference in length between the shortest connection and the connection which failed or recovered to extrapolate the resulting difference in OSNR, which provides a rough estimate of the SNR loss or gain after combining.

Table 1 below illustrates this method.

| ΔOSNR between shortest path and lightpath | SNR loss / gain after combining |
|---|---|
| 0.0 dB | 3.0 dB |
| -0.5 dB | 2.8 dB |
| -1.0 dB | 2.5 dB |
| ... | ... |

Alternatively, the controller module 31 at the transmitter side could receive periodic measurements of the new SNR value from the receiving node.

Once the new data rate is chosen, the controller module 31 sends signaling messages so as to set up both the optical transmitter and the optical receiver with the new channel coding rate and/or modulation format and/or symbol rate.

As an illustrative example, Fig. 8 is a functional representation of the transmitter 40 in the source node and the receiver 50 in the destination node. The receiver 50 comprises the combination module 10 as already described.

The controller modules 31 exchange signaling messages to convey failure-related information and/or rate-adaptation instructions. When the controller modules 31 at the transmitter side and at the receiver side are informed of a signal failure, the controller modules proceed to adapt the data-rate accordingly. The controller modules 31 may interact with different modules in the signal processing device depending on how the rate adaptation is implemented. For instance, the control module 31 drives a FEC module 41 or 51 to vary the coding scheme, a modulation mapper 42 or de-mapper 52 to vary the modulation scheme, or the ADCs 43 and 53 and optical front ends 44 and 54 to vary the symbol rate. Although not shown, the receiver 50 may comprise buffers similar to those shown in Fig. 4 or 6.

In an embodiment, the data rate is varied by reconfiguring the channel decoder (FEC module 41 or 51). This embodiment is based on the observation that a new generation of LDPC-based Soft Decision (SD) FEC consists of two channel coding stages: a first, conventional Reed-Salomon stage and a second LDPC stage. Such LDPC-based FEC causes a 20W-power consumption increase at the receiver side compared to conventional Hard Decision (HD) FEC consisting of a single Reed-Salomon stage. Simultaneously, the new generation of SD FEC is more robust and requires an additional 13% overhead on top of the 7% overhead of the HD FEC. Current implementations suggest increasing the symbol rate accordingly to maintain the useful data rate, e.g. 100Gbps.

Accordingly, in the normal operating mode, the transmitter and receiver turn off and bypass the LDPC additional stage. The loss of coding robustness caused by deactivating the LDPC stage is compensated by the diversity-combining gain at the receiver side. In the fall-back mode, the transmitter and receiver switch on the LDPC stage to have the more robust FEC coding scheme compensate for the SNR loss.

At the same time, the symbol rate may be switched between a first, lower symbol rate in the normal mode and a second, higher symbol rate in the fall-back mode, to keep the useful data rate constant despite the additional overhead.

Elements such as the control modules could be e.g. hardware means like e.g. an ASIC, or a combination of hardware and software means, e.g. an ASIC and an FPGA, or at least one microprocessor and at least one memory with software modules located therein.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

**Claims**

1. An optical communication method for transmitting an information signal, comprising:

sending a plurality of modulated optical signals (3, 4) carrying an information signal from a transmitting apparatus (A) to a receiving apparatus (B) via a plurality of optical paths,
receiving the plurality of modulated optical signals at the receiving apparatus (B) and
combining the plurality of modulated optical signals to detect the information signal,
monitoring a quality of transmission of the modulated optical signals, and
in response to degradation of the quality of transmission of a first one (3) of the modulated optical signals, performing a recovery action to improve a quality of transmission of a second one (4) of the modulated optical signals.

2. An optical communication method in accordance with claim 1, wherein the combining of the plurality of modulated optical signals is performed in accordance with combination parameters, the method further comprising modifying the combination parameters in response to degradation of the quality of transmission of the first modulated optical signal.

3. An optical communication method in accordance with claim 1, further comprising:

discontinuing the combining of the plurality of modulated optical signals in response to degradation of the quality of transmission of the first modulated optical signal, and
processing the second modulated optical signal to detect the information signal.

4. An optical communication method in accordance with any one of claims 1 to 3, wherein the recovery action comprises regenerating the second modulated optical signal at an intermediate apparatus (E) between the transmitting apparatus and the receiving apparatus.

5. An optical communication method in accordance with any one of claims 1 to 4, wherein the recovery action comprises decreasing a symbol rate of the second modulated optical signal sent from the transmitting apparatus.

6. An optical communication method in accordance with any one of claims 1 to 5, wherein the recovery action comprises changing a modulation scheme of the second modulated optical signal sent from the transmitting apparatus to a more robust modulation scheme.

7. An optical communication method in accordance with any one of claims 1 to 6, wherein the recovery action comprises changing an error-correction code of the second modulated optical signal sent from the transmitting apparatus to a more robust error-correction code.

8. An optical communication method in accordance with any one of claims 5 to 7, wherein the recovery action further comprises discontinuing a best-effort traffic flow modulated onto the second modulated optical signal sent from the transmitting apparatus.

9. An optical communication method in accordance with any one of claims 1 to 8, further comprising:

buffering the received modulated optical signals at the receiving apparatus to compensate for a differential delay between the optical paths (3, 4).

10. An optical communication method in accordance with any one of claims 1 to 9, wherein the quality of transmission monitoring comprises estimating a signal-to-noise ratio of the modulated optical signals.

11. An optical communication method in accordance with any one of claims 1 to 10, wherein the combining of the plurality of modulated optical signals is performed in accordance with a maximum ratio combining method.

12. An optical communication method in accordance with any one of claims 1 to 11, further comprising:

in response to improvement of the quality of transmission of the first modulated optical signal (3), performing a reversion action to degrade the quality of transmission of the second modulated optical signal (4) and/or modifying combination parameters in accordance with which the combining of the plurality of modulated optical signals is performed.

13. An optical communication network, comprising:

a transmitting apparatus (A) comprising a plurality of output ports and an optical transmission module (40) adapted to send a plurality of modulated optical signals carrying an information signal through the plurality of output ports,
a receiving apparatus (B) comprising a plurality of input ports and an optical reception module (50),
a plurality of optical paths (3, 4) each connecting an output port of the transmitting apparatus to an input port of the receiving apparatus,
wherein the optical reception module (50) is adapted to receive the plurality of modulated optical signals via the input ports and to combine the plurality of modulated optical signals to detect the information signal,
wherein the receiving apparatus further comprises a recovery signaling module (17, 31) adapted to transmit a recovery signal (5, 30) in response to degradation of the quality of transmission of a first one (3) of the modulated optical signals to cause improvement of a quality of transmission of a second one (4) of the modulated optical signals.

14. An optical communication network in accordance with claim 13, further comprising an hybrid optical node (E) located on an optical path of the second modulated optical signal (4), the hybrid optical node comprising a transparent forwarding section (25), a regenerated forwarding section (26), and a recovery control module adapted to switch the second modulated optical signal from the transparent forwarding section to the regenerated forwarding section, in response to receiving the recovery signal (5).

15. An optical communication network in accordance with claim 13 or 14, wherein the transmitting apparatus (A) further comprises a recovery control module (31) adapted to modify a parameter of the second modulated optical signal in response to receiving the recovery signal, wherein the parameter is selected in the group consisting of bitrate, symbol rate, modulation scheme and error-correction coding scheme.

**Amended claims in accordance with Rule 137(2) EPC.**

1. An optical communication method for transmitting an information signal, comprising:

sending a first and a second modulated optical signals (3, 4) carrying an information signal from a transmitting apparatus (A) to a receiving apparatus (B) via a first and a second optical paths,
receiving the first and second modulated optical signals at the receiving apparatus (B) and combining the first and second modulated optical signals to detect the information signal,
monitoring a quality of transmission of the modulated optical signals, and
in response to degradation of the quality of transmission of the first one (3) of the modulated optical signals, performing a recovery action to improve a quality of transmission of the second one (4) of the modulated optical signals, discontinuing the combining of the first and second modulated optical signals and processing the second modulated optical signal to detect the information signal, and
in response to improvement of the quality of transmission of the first modulated optical signal (3), performing a reversion action to degrade the quality of transmission of the second modulated optical signal (4) and resuming the combining of the first and second modulated optical signals to detect the information signal.

2. An optical communication method in accordance with claim 1, wherein the recovery action comprises regenerating the second modulated optical signal at an intermediate apparatus (E) between the transmitting apparatus and the receiving apparatus.

3. An optical communication method in accordance with any one of claims 1 to 2, wherein the recovery action comprises decreasing a symbol rate of the second modulated optical signal sent from the transmitting apparatus.

4. An optical communication method in accordance with any one of claims 1 to 3, wherein the recovery action comprises changing a modulation scheme of the second modulated optical signal sent from the transmitting apparatus to a more robust modulation scheme.

5. An optical communication method in accordance with any one of claims 1 to 4, wherein the recovery action comprises changing an error-correction code of the second modulated optical signal sent from the transmitting apparatus to a more robust error-correction code.

6. An optical communication method in accordance with any one of claims 3 to 5, wherein the recovery action further comprises discontinuing a best-effort traffic flow modulated onto the second modulated optical signal sent from the transmitting apparatus.

**7.** An optical communication method in accordance with any one of claims 1 to 6, further comprising:

buffering the received first and second modulated optical signals at the receiving apparatus to compensate for a differential delay between the first and second optical paths (3, 4).

**8.** An optical communication method in accordance with any one of claims 1 to 7, wherein the quality of transmission monitoring comprises estimating a signal-to-noise ratio of the first and second modulated optical signals.

**9.** An optical communication method in accordance with any one of claims 1 to 8, wherein the combining of the first and second modulated optical signals is performed in accordance with a maximum ratio combining method.

**10.** An optical communication network, comprising:

a transmitting apparatus (A) comprising a first and a second output ports and an optical transmission module (40) adapted to send a first and a second modulated optical signals carrying an information signal through the first and second output ports,
a receiving apparatus (B) comprising a first and a second input ports and an optical reception module (50),
a first and a second optical paths (3, 4) each connecting an output port of the transmitting apparatus to an input port of the receiving apparatus,
wherein the optical reception module (50) is adapted to receive the first and second modulated optical signals via the first and second input ports and to combine the first and
second modulated optical signals to detect the information signal,
wherein the receiving apparatus further comprises a recovery signaling module (17, 31) adapted to transmit a recovery signal (5, 30) in response to degradation of the quality of transmission of the first one (3) of the modulated optical signals to cause improvement of a quality of transmission of the second one (4) of the modulated optical signals and to cause the optical reception module (50) to discontinue the combining of the first and second modulated optical signals and to process the second modulated optical signal to detect the information signal, and
wherein the recovery signaling module (17, 31) is adapted to transmit a reversion signal (5, 30) in response to improvement of the quality of transmission of the first modulated optical signal (3), to cause degradation of the quality of transmission of the second modulated optical signal (4) and to cause the optical reception module (50) to resume the combining of the first and second modulated optical signals to detect the information signal.

**11.** An optical communication network in accordance with claim 10, further comprising an hybrid optical node (E) located on an optical path of the second modulated optical signal (4), the hybrid optical node comprising a transparent forwarding section (25), a regenerated forwarding section (26), and a recovery control module adapted to switch the second modulated optical signal from the transparent forwarding section to the regenerated forwarding section, in response to receiving the recovery signal (5).

**12.** An optical communication network in accordance with claim 10 or 11, wherein the transmitting apparatus (A) further comprises a recovery control module (31) adapted to modify a parameter of the second modulated optical signal in response to receiving the recovery signal, wherein the parameter is selected in the group consisting of bitrate, symbol rate, modulation scheme and error-correction coding scheme.

FIG.1

FIG.2

FIG.3

FIG.4

FIG.5

FIG.6

## FIG.7

**FIG.7**

## FIG.8

**FIG.8**

FIG.9

Europäisches
Patentamt

European
Patent Office

Office européen
des brevets

## EUROPEAN SEARCH REPORT

Application Number

EP 12 18 3011

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/318007 A1 (OIKAWA SHINGO [JP]) 29 December 2011 (2011-12-29) | 1-3,8-13 | INV. H04L12/26 H04B10/032 H04J14/02 |
| A | * abstract * * page 1, paragraph 2 - page 2, paragraph 25 * * page 3, paragraph 44 * * page 4, paragraph 59 - page 5, paragraph 81 * * page 6, paragraph 94 - paragraph 97 * * figure 4 * | 4,14 | |
| Y,D | US 2002/109885 A1 (ABURAKAWA Y; ESHINU S; OTSU A; OTSU T; YAMAO Y; YOSHINO H; YUKAWA Y) 15 August 2002 (2002-08-15) | 4,14 | |
| A | * abstract * * page 1, paragraph 2 * * page 2, paragraph 21 - paragraph 26 * * page 2, paragraph 34 - paragraph 35 * * page 3, paragraph 43 - paragraph 45 * * page 3, paragraph 50 - page 4, paragraph 64 * * page 6, paragraph 139 - paragraph 142 * * page 7, paragraph 146 - paragraph 161 * * page 8, paragraph 167 - paragraph 172 * | 1-3,8-13 | |
| A | EP 1 608 112 A1 (BROADCOM CORP [US]) 21 December 2005 (2005-12-21) * abstract * * page 2, paragraph 6 - paragraph 7 * * page 7, paragraph 74 - paragraph 78 * * page 8, paragraph 87 - paragraph 91 * | 1-4,8-14 | TECHNICAL FIELDS SEARCHED (IPC) H04J H04B H04L |
| A | US 2011/292814 A1 (SUGAHARA HIROMITSU [JP]) 1 December 2011 (2011-12-01) * abstract * * page 1, paragraph 7 - paragraph 9 * * page 2, paragraph 22 - paragraph 27 * * page 3, paragraph 35 - paragraph 43 * | 1-4,8-14 | |

-/--

~~The present search report has been drawn up for all claims~~

| Place of search | Date of completion of the search | Examiner |
|---|---|---|
| Munich | 19 April 2013 | Avilés Martinez, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

**EP 2 704 364 A1**

Europäisches Patentamt
European Patent Office
Office européen des brevets

# EUROPEAN SEARCH REPORT

Application Number

EP 12 18 3011

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 7 336 902 B1 (GERSZBERG IRWIN [US] ET AL) 26 February 2008 (2008-02-26)<br>* abstract *<br>* figure 6 *<br>* column 1, line 40 - column 2, line 12 *<br>----- | 1-4,8-14 | |
| Y | EP 2 395 684 A1 (HITACHI LTD [JP]) 14 December 2011 (2011-12-14)<br>* abstract *<br>* column 5, line 13 - column 7, line 24 *<br>----- | 4,14 | |

TECHNICAL FIELDS SEARCHED (IPC)

The present search report has been drawn up for all claims

| Place of search | Date of completion of the search | Examiner |
|---|---|---|
| Munich | 19 April 2013 | Avilés Martinez, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☒ Only part of the further search fees have been paid within the fixed time limit. The present European search report has been drawn up for those parts of the European patent application which relate to the inventions in respect of which search fees have been paid, namely claims:

4, 14

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 12 18 3011

The Search Division considers that the present European patent application does not comply with the
requirements of unity of invention and relates to several inventions or groups of inventions, namely:

1. claims: 1-3, 8-13

    Claims 1 to 3 and 8 to 13 are directed to a method of
    improving the quality of transmission in an optical network
    by efficiently combining at the receiver the optical signals
    received from a plurality of paths in response to a quality
    degradation.
                            ---

2. claims: 4, 14

    Claims 4 and 14 are directed to a method of improving the
    quality of transmission in an optical network by
    regenerating the optical signal at an intermediate apparatus
    in response to a quality degradation.
                            ---

3. claims: 5-7, 15

    Claims 5 to 7 and 15 are directed to a method of improving
    the quality of transmission in an optical network by
    modifying some transmission parameters (symbol rate,
    modulation) at the transmitting apparatus in response to a
    quality degradation.
                            ---

## ANNEX TO THE EUROPEAN SEARCH REPORT
## ON EUROPEAN PATENT APPLICATION NO.

EP 12 18 3011

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2013

| Patent document cited in search report | | Publication date | Patent family member(s) | | Publication date |
|---|---|---|---|---|---|
| US 2011318007 | A1 | 29-12-2011 | EP | 2410675 A1 | 25-01-2012 |
| | | | JP | 2010219594 A | 30-09-2010 |
| | | | US | 2011318007 A1 | 29-12-2011 |
| | | | WO | 2010103710 A1 | 16-09-2010 |
| US 2002109885 | A1 | 15-08-2002 | CN | 1371185 A | 25-09-2002 |
| | | | EP | 1233549 A2 | 21-08-2002 |
| | | | JP | 2002246965 A | 30-08-2002 |
| | | | KR | 20020067413 A | 22-08-2002 |
| | | | SG | 100770 A1 | 26-12-2003 |
| | | | US | 2002109885 A1 | 15-08-2002 |
| EP 1608112 | A1 | 21-12-2005 | CN | 1716907 A | 04-01-2006 |
| | | | EP | 1608112 A1 | 21-12-2005 |
| | | | TW | I328366 B | 01-08-2010 |
| | | | US | 2005286424 A1 | 29-12-2005 |
| US 2011292814 | A1 | 01-12-2011 | EP | 2400702 A1 | 28-12-2011 |
| | | | US | 2011292814 A1 | 01-12-2011 |
| | | | WO | 2010095705 A1 | 26-08-2010 |
| US 7336902 | B1 | 26-02-2008 | US | 7336902 B1 | 26-02-2008 |
| | | | US | 7664400 B1 | 16-02-2010 |
| | | | US | 8009989 B1 | 30-08-2011 |
| EP 2395684 | A1 | 14-12-2011 | EP | 2395684 A1 | 14-12-2011 |
| | | | JP | 2011259132 A | 22-12-2011 |
| | | | US | 2012002963 A1 | 05-01-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002109885 A1

**Non-patent literature cited in the description**

- RSVP-TE Extensions for E2E GMPLS Recovery. *Internet Engineering Task Force's RFC 4872,* May 2007

- **A. MOREA et al.** Power management of optoelectronic interfaces for dynamic optical networks. *ECOC,* 2011